# EUROPEAN PATENT APPLICATION

(11) **EP 4 067 039 A1**
(43) Date of publication of application: **05.10.2022**
(21) Application number: 21166406.5
(22) Date of filing: 31.03.2021
(51) Int. Cl.: B29C 33/14, B29C 70/42, B29C 70/54, B29D 99/00

(54) **A METHOD OF MANUFACTURING A SHELL OF A WIND TURBINE BLADE**

(71) Applicant: LM Wind Power A/S, 6000 Kolding (DK)
(72) Inventor: KNOBLOCK, Jasper, New Orleans, LA 70129 (US)
(74) Representative: COPA Copenhagen Patents

(57) **Abstract**

A method of manufacturing a portion of a shell of a wind turbine blade is disclosed. The method includes positioning a support member in an inner surface of a mould. The inner surface of the mould defines a profile of the portion of the shell. Further, a plurality of stacks of fiber is placed sequentially in the inner surface of the mould. Each of the plurality of stacks of fiber is secured to the support members by fastening member, and thereby eliminating the need for stitching the stack of fibres. The method further includes infusing resin through the plurality of stacks of fiber and allowing the resin to cure to obtain the portion of the shell of the wind turbine. The method of the present disclosure eliminates the conventional stitching process, thereby eliminating wrinkles that may be formed in the blade due to improper stitching.

## Description

### Field of the Invention

The present invention relates to a wind turbine blade. Particularly but not exclusively, the disclosure discloses a method of manufacturing a shell of the wind turbine blade. In addition, the present invention relates to methods of laying a stack of fibre layers in a mould for a wind turbine blade and securing the stack to the mould without the need for stitching.

### Background of the Invention

Modern wind turbines are commonly used to supply electricity into the electrical grid. Wind turbine blades are typically attached, at a blade root portion, to a rotor hub, either directly or through an extender. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid. In order to extract a larger amount of energy from the wind, the blades are increasing in size.

The blades are typically made from composite materials: reinforcing fibers may be bonded to one another with a resin and, subsequently, cured to consolidate. Different kinds of fibers (e.g., glass, carbon, combinations) and resins (e.g., epoxy, polyester, vinyl ester) may be used in different forms (e.g., prepreg, fiber sheets).

In general terms, a manufacturing process of a wind turbine blade may comprise a first step of moulding and curing two separate longitudinal blade halves (shells) made out of composite material and a second step of joining together these two blade halves and removing the final blade from the mould. Alternatively, a complete blade may be manufactured in a single moulding step.

A well-known process for manufacturing of shells for large wind turbines is the infusion process. The general principle of infusion is to "suck" a resin into the reinforcing fibers using a vacuum. With infusion processes substantially low cost and high-quality blades can be manufactured. Infusion processes have the added benefit of having substantially low volatile emissions.

As the size of the blades increases, the mould also becomes larger in diameter and length. Large mould may comprise a portion having a substantially vertical inner surface, in particular in the portion where the root of the blades is formed. The root of a blade may comprise a substantially cylindrical portion. The fibre layers laid up in such a large mould are also large and heavy and it may be difficult to maintain them in the correct position, especially when they are positioned along such a substantially vertical portion of the mould, where they can tend to fall or slide down.

Some known manufacturing methods use stitching or gluing of the fibre layers to each other in order to form temporary bonds holding the fibre layers in place until a stack ready for infusion is formed. But this can create discontinuities or wrinkles in the end material and in the geometry of the final structure which lead to undesired stress concentration points.

In some other conventionally known methods of manufacturing a wind turbine blade, it includes manufacturing a wind turbine blade comprising steel wire reinforced matrix material in which at least 20% by volume of the fibre material consists of metallic wires. The blades are manufactured in mould comprising magnet means along an upwardly facing surface. The magnets can be used to retain or secure the fibre layers against the forming surface. However, the blades manufactured according to such methods comprise metallic elements embedded in the composite material. These blades can be heavier than blades manufactured from composite material only. Furthermore, the metallic elements can interfere with the lightning rod. Another known method comprises clamping of the fiber layers to the mould. The clamp may be removed frequently to place subsequent layers of fibers. Removing the clamp frequently may loosen the fibers and allow formation of wrinkles.

Thus, there still exists a need for improved methods of manufacturing wind turbine blades, in particular large wind turbine blades that reduce or even avoid the formation of wrinkles or discontinuities during the manufacturing process.

### Summary of the Invention

One or more shortcomings of the conventional methods are overcome by the methods as claimed and additional advantages are provided through the provision of assembly as claimed in the present invention.

Additional features and advantages are realized through the techniques of the present invention. Other embodiments and aspects of the disclosure are described in detail herein and are considered as a part of the claimed disclosure.

In one non-limiting embodiment of the disclosure, a method of manufacturing a portion of a shell of a wind turbine blade is disclosed. The method includes positioning a support member in an inner surface of the mould. The inner surface of the mould defines a profile of the portion of the shell. Further, a plurality of stacks of fiber is placed sequentially on the inner surface of the mould. Each of the plurality of stacks of fiber is secured to the support members by a fastening member thereby eliminating stitching. A resin is infused through the plurality of stacks of fiber. Upon infusing the resin through the plurality of stacks of fiber, the resin is subsequently allowed to cure to obtain the portion of the shell of the wind turbine.

In a preferred embodiment of the disclosure, the fastening members are at least one of rivet, pin, and staple.

In a preferred embodiment of the disclosure, dimension of the fastening members used to secure the plurality of stacks of fiber to the support member increases with each stack of fiber of the plurality of stacks of fibres placed on the inner surface of the mould.

In a preferred embodiment of the disclosure, the inner surface of the mould is defined with a plurality of provisions to accommodate the support member. The support member is a rubber cork.

In a preferred embodiment of the disclosure, the plurality of provisions is defined at a leading edge and a trailing edge of the inner surface proximal to the root end of the mould. Each of the plurality of provisions extends along spanwise direction on the inner surface of the mould from the root end up to a predetermined distance.

A certain embodiment of the disclosure includes placing a layer of biax fiber on the inner surface of the mould before positioning the plurality of stacks of fiber and on the plurality of stacks of fiber. A portion of the layer of biax fiber is secured to flanges defined on the leading edge and trailing edge of the mould. The portion of the layer of biax is secured to the flanges by a bonding process.

A certain embodiment of the disclosure includes removing the portion of the shell of the wind turbine blade from the mould upon curing the infused resin and then trimming the fastening members from the shell.

In another non-limiting embodiment of the disclosure, a mould for manufacturing a shell of a wind turbine blade is disclosed. The mould includes an inner surface and an outer surface. The inner surface is defined by an aerodynamic shape of the wind turbine blade and extends in a spanwise direction. The inner surface of the mould is defined with a plurality of provisions and a support member is accommodated in each of the plurality of provisions. The support member is configured to receive fastening members which in turn is configured to secure each of the plurality of stacks of fibres positioned in the inner surface of the mould.

In a preferred embodiment of the disclosure, the one or more layers of fibres on the mould are glass fibres.

In yet another non-limiting embodiment of the disclosure, a method for manufacturing a wind turbine blade having a profiled contour including a pressure side shell and a suction side shell, a leading edge and a trailing edge with a chord having a chord length extending therebetween. The wind turbine blade extending in a spanwise direction between a root end and a tip end. The method includes manufacturing at least one of the pressure side shell and the suction side shell of the wind turbine blade. Joining the pressure side shell with the suction side shell by bonding methods to obtain a wind turbine blade.

A preferred embodiment includes trimming excessive material on the leading edge of the wind turbine blade.

As used herein, the term "spanwise" is used to describe the orientation of a measurement or element along the blade from its root end to its tip end. In some embodiments, spanwise is the direction along the longitudinal axis and longitudinal extent of the wind turbine blade. The term "chordwise" is used to describe the orientation of a measurement or element from its leading edge to its trailing edge. In some embodiments, chordwise is the direction along the lateral axis and lateral extent of the wind turbine blade.

It is to be understood that the aspects and embodiments of the disclosure described above may be used in any combination with each other. Several of the aspects and embodiments may be combined to form a further embodiment of the disclosure.

The foregoing summary is illustrative only and is not intended to be in any way limiting. In addition to the illustrative aspects, embodiments, and features described above, further aspects, embodiments, and features will become apparent by reference to the drawings and the following detailed description.

### Description of the Invention

The invention is explained in detail below with reference to an embodiment shown in the drawings, in which
Fig. 1 illustrates a perspective view of one embodiment of a wind turbine,
Fig.2 illustrates an exemplary schematic view of a mould used for manufacturing of a portion of a shell of a blade of the wind turbine, in accordance with an embodiment of the disclosure,

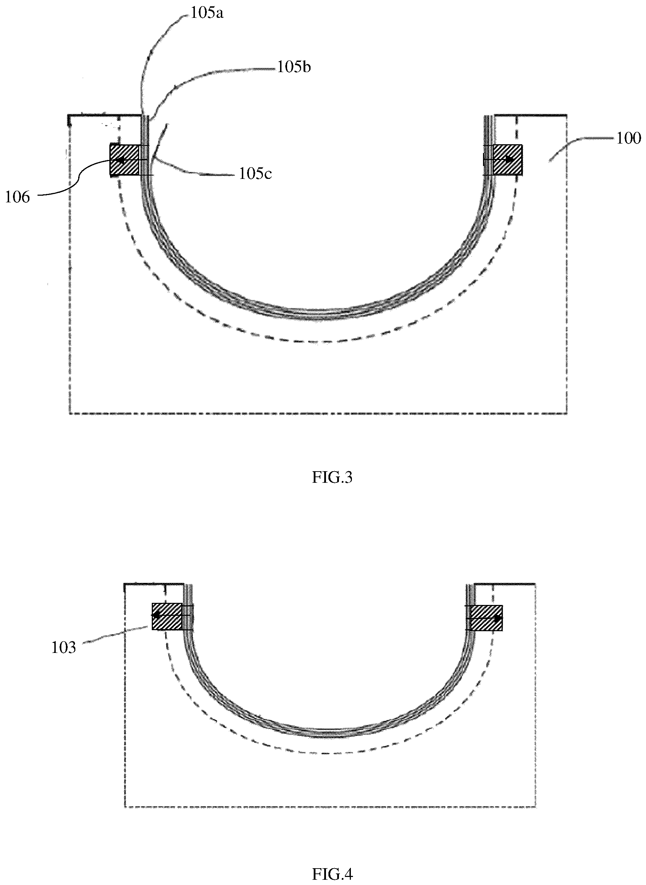

Figs. 3 and 4 illustrate exemplary schematic views of the mould with a plurality of stacks of fiber, in accordance with an embodiment of the disclosure,
Fig. 5 illustrates an exemplary schematic view of the mould along with the plurality of stack of fibres during resin infusion,
Fig(s) 6a to 6c illustrate schematic views of the plurality of stack of fibres secured to the mould by stapling, in accordance with an exemplary embodiment of the disclosure; and
Fig. 7 illustrates fastening members used in securing the plurality of stack of fibres to the mould.

### Detailed Description

Reference now will be made in detail to embodiments of the invention, one or more examples of which are illustrated in the drawings. Each example is provided by way of explanation of the invention, not limitation of the invention. In fact, will be apparent to those skilled in the art that various modifications and variations can be made in the present invention without departing from the scope or spirit if the invention. For instance, features illustrated or described as part of one embodiment can be used with another embodiment to yield a still further embodiment. Thus, it is intended that the present invention covers such modifications and variations as come within the scope of the appended claims and their equivalents.

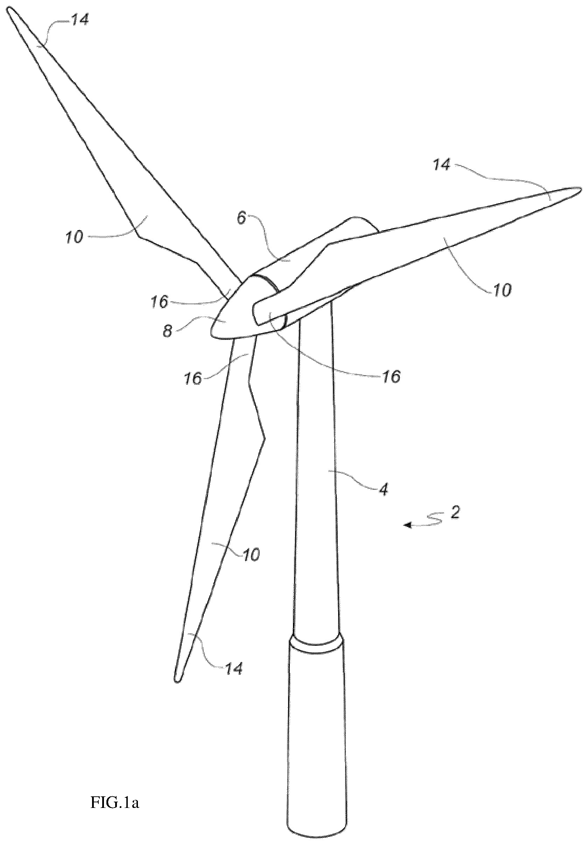

Referring now to the drawings, FIG. 1a illustrates a perspective view of one embodiment of a wind turbine 2 according to the present invention. In the illustrated embodiment, the wind turbine 2 is a horizontal-axis wind turbine. Alternatively, the wind turbine 2 may be a vertical-axis wind turbine. In addition, as shown, the wind turbine 2 may include a tower 4 that extends from a support surface, a nacelle 6 mounted on the tower 4, a generator positioned within the nacelle 16, a gearbox may couple to the generator, and a rotor 8 that is rotationally coupled to the gearbox with a rotor shaft. Further, as shown, the rotor 8 includes a rotatable hub and at least one rotor blade 10 coupled to and extending outward from the rotatable hub. As shown, the rotor blade 10 includes a blade tip 14 and a blade root 16.

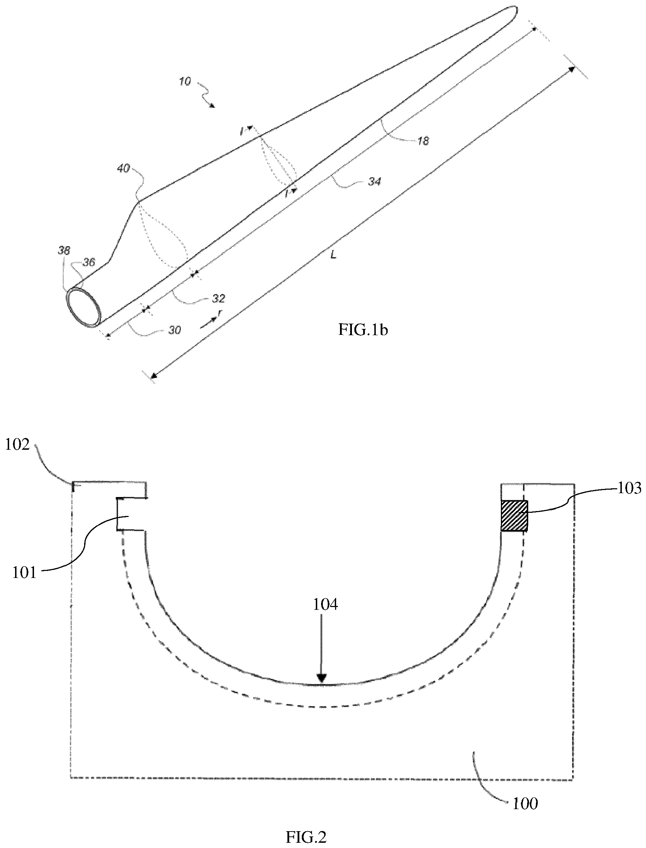

FIG. 1b shows a perspective view of the wind turbine blade 10. The wind turbine blade 10 has the shape of a conventional wind turbine blade 10 and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.
The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub 8. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub 8. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34. Fig. 1b also illustrates the longitudinal extent L, length, or longitudinal axis of the blade.

It should be noted that, the chords of different sections of the blade normally do not lie in a common plane, since the blade may be twisted and/or curved (i.e., pre-bent), thus providing the chord plane with a correspondingly twisted and/or curved course, this being most often the case in order to compensate for the local velocity of the blade being dependent on the radius from the hub.

The blade 10 is typically made from a pressure side shell 36 (may also be called as first shell half structure) and a suction side shell 38 (may also be called as second shell half structure) that are glued to each other along bond lines at the leading edge 18 and the trailing edge 20 of the blade 10. Hereinafter, the method of manufacturing the blade 10 or a portion of the blade 10 is described in detail with respect to FIG(s) 2 to 7.

Fig. 2 shows an exemplary schematic view of a mould 100 for manufacturing of a composite structure such as hub the wind turbine blade 10 root half according to a first embodiment. The mould 100 may have an inner surface 104 with two vertical or substantially vertical portions at an end proximal to the root end of the wind turbine blade 10. The following explanation is made considering one of these two substantially vertical portions (i.e., a root region 30 closest to the hub), but it is however applicable to the other one as well.

The pressure and suction side shells of the wind turbine blade10 are manufactured using the mould 100 as shown in Fig 2. The configuration of the mould 100 which will be explained hereinafter may be used to manufacture a portion of the pressure side and suction side shells i.e., a root region 30 closest to the hub which may be substantially vertical. However, the same configuration may be adapted for manufacturing the entire pressure side and the suction side shell and is explained hereinafter accordingly.

The mould 100 may be defined with an outer surface and an inner surface 104. The inner surface 104 of the mould 100 is aerodynamic in shape and the mould 100 may be defined with a plurality of provisions 101. The plurality of provisions 101 may be at least one of a slot or a groove for housing a support member 103. In preferred embodiment, each of the plurality of provisions 101 may be defined proximal to the root end of the mould 100 (i.e., the portion of the mould of vertical portion). Each of the plurality of provisions 101 may be defined at a leading edge and a trailing edge of the inner surface of the mould 100. In another embodiment, each of the plurality of provisions 101 may extend along a spanwise direction of the blade 10 along the inner surface 104 from the root end up to a pre-determined distance. The length of the plurality of provisions 101 should, however, not be construed as a limitation of the present disclosure. The plurality of provisions 101 may be defined from the root end of the mould 100 to the tip end of the mould 100 based on the requirement.

The support member 103 housed within each of the plurality of provisions 101 may be a rubber stopper or corks but not limiting to the same. Also, the material for the support member 103 may be chosen from any such elastic material which can allow easy ingress of fastening members 106. Further, the mould 100 may be defined with a flange 102 which may extend substantially outward from the leading edge and the trailing edge. The flange 102 may be defined along the periphery of the leading edge and the trailing edge of the mould 100. The flange 102 may run along the periphery of the leading and trailing edge from root end to the tip end of the mould 100.

Further, the mould 100 of the above disclosed configuration may be further used for manufacturing the pressure and suction side shell parts. Initially, a blade gel coat or primer is typically applied to the inner surface 104 of the mould 100. Further, fiber reinforcement and/or fiber fabrics are placed into the mould 100. As shown in FIG(s) 3 and 4, multiple layers of fiber fabrics may be positioned on the mould 100 and the layers of fiber fabrics on the mould 100 may include aramid fiber fabrics, glass fiber fabrics, carbon fiber fabrics or hybrid fiber fabrics made of glass and carbon. Other, fiber fabrics not limiting to the above-mentioned fabrics which are known in the art may also be used.

Hereinafter, a method of placing the multiple layers of fiber fabrics is explained in detail. The method disclosed advantageously eliminates stitching process that may be involved in the manufacturing of pressure and suction side shells of the wind turbine blade 10. Generally, the stitching process is involved in the manufacturing of the blade 10 to hold multiple layers of fiber fabrics together. For example, in the conventional stitching process, the multiple layers of fiber fabrics were laid on the inner surface of the mould and then stitched together before resin infusion. In such cases, as the ends were not secured, even a minor mistake from the operator [i.e., the person involved in stitching] during stitching may cause defects such as wrinkles and the like in the blade 10. If the stitching process is being carried out at the root region of the mould 100, the inner surface 104 at the root region may be substantially vertical and it poses even bigger challenges for stitching. In such cases, the multiple fiber fabrics placed at the root region may experience high gravitational forces and may be pulled down causing wrinkles and other such defects in the cured blade. Hence, the method of present disclosure may be employed in securing the multiple stacks of the fiber fabrics to the inner surface 104 with ease unlike the conventional stitching process.

Hereinafter, the multiple layers of fiber fabrics may be referred to as a plurality of stack of fibers and are depicted in the diagrams by referral numerals 105a, 105b and 105c. In an embodiment, the plurality of stacks of fibers 105a, 105b and 105c may include a first stack of fibers 105a, a second stack of fibers 105b and a third stack of fibers 105c. However, the number of stacks iterated above should not be construed as a limitation of the present invention as the number of stacks may depend on the thickness of the blade 10 that may be manufactured. In an embodiment, the first stack of fiber layers 105a may include one or more layers of fiber fabrics hoarded together. Similarly, the second stack of fiber layers 105b and third stack of fiber layers 105c may also include one of more layers of fiber fabrics. Firstly, the method includes positioning the support members 103 in each of the plurality of provisions 101 defined in the inner surface of the mould 100. Once the support members 103 are placed with in the mould 100, each of the plurality of provisions 101 may be sealed by an adhesive member such as but not limiting to an adhesive tape. The plurality of provisions 101 may be sealed to eliminate flow of resin into the plurality of provisions 101.

Once the plurality of provisions 101 is sealed, a biax-fiber 108 may be placed on the inner surface 104 of the mould 100. In an exemplary embodiment, one end of the biax-fiber 108 may be first secured to the flange 102 defined on the leading edge of the mould 100. The biax-fiber 108 may be firmly rolled over the inner surface 104 of the mould 100 and another end of the biax-fiber 108 may be secured to the flange 102 defined on the trailing edge of the mould 100. In an embodiment, both ends of the biax-fiber 108 may be secured to the flanges 102 by at least one of mechanical joining process or adhesive bonding such as but not limiting to clamping or adhesive tapes, respectively.

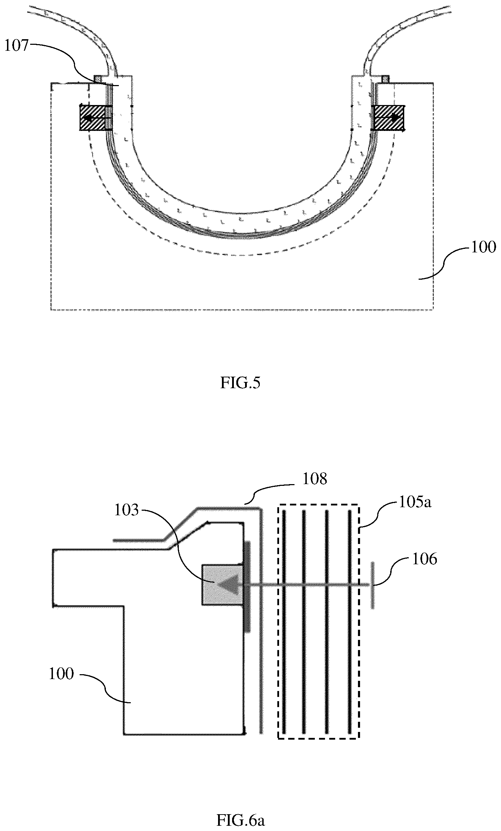

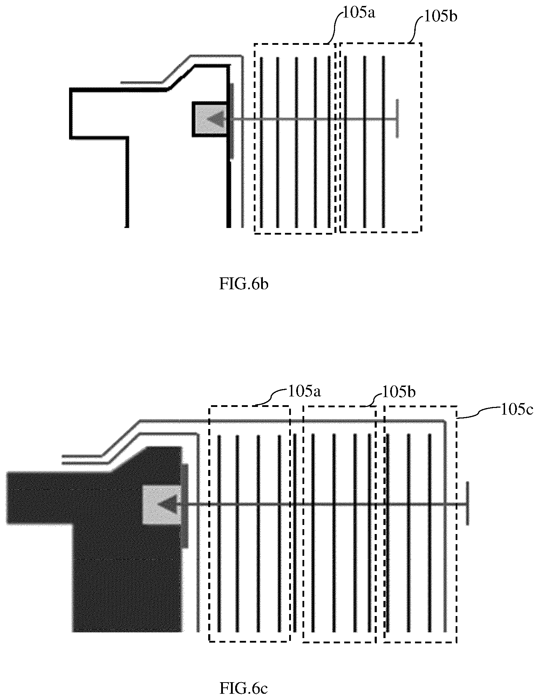

Further as shown in FIG. 6a, the method includes placing the first stack of fibers 105a of the plurality of stacks of fiber on the inner surface 104 of the mould 100. The first stack of fibers 105a may be positioned on the inner surface 104 and may be secured to the inner surface 104 by a mechanical joining process for example using the fastening members 106. The fastening member 106 may be ingressed into the support member 103 through the first stack of fibers 105a. In an embodiment, one end of the first stack of fibers 105a may be secured to the support member 103 at the leading edge in the inner surface 104. Once the first stack of fibers 105a is secured, the other end is rolled over firmly along the inner surface 104 until it reaches the trailing edge of the mould 100. The other end of the first stack of fibers 105a may then be secured to the support member 103 that may be positioned on the trailing edge. In a preferred embodiment, the fastening members 106 may be but not limiting to rivets, pins, and staples.

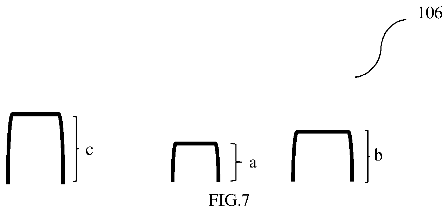

Similarly, the second stack of fibers 105b and the third stack of fibers 105c are sequentially placed on the first stack of fibers 105a until the desired thickness is achieved [as shown in FIG(s) 6b and 6c]. Once the first stack of fibers 105a is secured, the second stack of fibers 105b may be placed over the first stack of fibers 105a. Analogous to the first stack of fibers 105a, the second stack of fibers 105b may also be secured to the support member 103 by the fastening member 106. In an embodiment, length or dimension of the fastening member 106 that may be used for securing the second stack of fibers 105b may be bigger than the fastening members 106 used to secure first stack of fibers 105a [as shown in FIG.7].

As shown in FIG.7, the size of the fastening member 106 (in this case a staple) may vary based on the number of stacks of fibers placed on the inner surface 104 of the mould 100. For the initial stack of fibers 105a, the fastening member 106 of smaller dimensions (a) may be employed to secure the stack of fibers 105a to the support member 103. As the thickness of the stacks of fibers 105b and 105c (up to desired thickness) increases on the inner surface 104, to secure such stacks of fibers 105a and 105b to the support member 103, the fastening member 106 of bigger dimension (b and c) may be selected [best seen in FIG(s) 6a to 6c].

The method further includes laying rest of the stacks of fibers on the stack of fibers that may be previously secured to the inner surface 104 of the mould 100 until the desired thickness is achieved. Once the desired thickness is achieved by placing the plurality of stack of fibers 105a, 105b and 105c, another layer of the biax-fiber 108 may be placed over the plurality of stack of fibers 105a, 105c and 105c. Another layer of the biax-fiber 108 may be placed over the plurality of stack of fibers 105a, 105b and 105c similar to the biax-fiber layer 108 that is placed before laying the plurality of fibers 105a, 105b and 105c.

Further, placing of the plurality of stack of fibers 105a, 105b and 105c on the mould 100 may be followed by resin infusion as shown in FIG. 5 and depicted by referral numeral 107. A vacuum is typically used to draw epoxy resin material into the mould 100, and the resin is allowed to be cured to obtain the pressure side shell 36 and the suction side shell 38. Several other moulding techniques are known for manufacturing wind turbine blades 10, including compression moulding and resin transfer moulding. Not limiting to the above-mentioned techniques, any of the methods of manufacturing pressure side and suction side shell which are known in the art may be used. The method further includes positioning and securing the spar element, shear web and other blade components on the at least one of the pressure side shell 36 or the suction side shell 38. The blade components including the spar element and the shear web may be secured to the blade by at least of resin infusion or adhesive bonding.

In an embodiment, the blade components may be positioned on the pressure side shell 36. However, this should not be construed as a limitation of the present disclosure as the opposite may also be employed i.e., positioning, and securing the blade components on the suction side shell 38 and the earlier case is considered for better understanding of the process. Upon curing the shell 36 and 38 of the wind turbine blade 10 including the blade components, the shell 36 and 38 may be removed from the mould 100. In a preferred embodiment, the support member 103 that is used to secure the plurality of stack of fibers 105a, 105b and 105c may also be removed along with the shell. These support members 103 may then be removed and be reused for the next process.

Further, the fastening members 106 in the cured shell may be removed or chopped from the shell by methods such as but not limiting to griding or trimming. Once the support member 103 and the fastening members 106 are removed, the suction side shell 38 may be lowered on to the pressure side shell 36. Before lowering the suction side shell 38 on to the pressure side shell 36, adhesive is applied over a leading edge and a trailing edge of the pressure side shell 36. Once the adhesive is applied on the leading edge and the trailing edge of the pressure side shell 36 the suction side shell may be lowered over the pressure side shell. Upon bonding the pressure side shell 36 and the suction side shell 38, the adhesive may be allowed to cure to obtain the blade 10 of the wind turbine 2. Further, excess material may be trimmed of from the blade 10. In an embodiment, the method of placing the plurality of stack of fibres 105a, 105b and 105c and securing them to the inner surface 104 of the mould 100 using fasteners eliminates the conventional stitching process. Eliminating the conventional stitching process eliminates wrinkles that may be formed in the blade due to improper stitching.

The invention is not limited to the embodiments described herein and may be modified or adapted without departing from the scope of the present invention.

Exemplary embodiments of the present disclosure are set out in the following items:
1. A method of manufacturing a portion of a shell of a wind turbine blade (10), the method comprising:
   positioning, a support member (103) in an inner surface of a mould (100), wherein the inner surface (104) of the mould (100) defines a profile of the portion of the shell;
   placing a plurality of stacks of fiber (105a, 105b and 105c) sequentially on the inner surface (104) of the mould (100);
   securing each of the plurality of stacks of fiber (105a, 105b and 105c) to the support member (103) by fastening members (106) thereby eliminating stitching of each of the plurality of stacks of fibers; and
   infusing resin through the plurality of stacks of fiber (105a, 105b and 105c) and subsequently curing the same to obtain the portion of the shell of the wind turbine blade (10).
2. The method according to item 1, wherein the fastening members (106) are at least one of rivets, pins, and staples.
3. The method according to items 1 and 2, wherein dimensions of the fastening members (106) used to secure the plurality of stacks of fiber (105a, 105b and 105c) to the support member (103) increases with each stack of fiber of the plurality of stacks of fibers (105a, 105b and 105c) placed on the inner surface (104) of the mould (100).
4. The method according to any of items 1-3, wherein the inner surface (104) of the mould (100) is defined with a plurality of provisions to accommodate the support member (103).
5. The method according to any of items 1-4, wherein the support member (103) is a rubber cork.
6. The method according to any of items 4-5 comprises sealing each of the plurality of provisions by an adhesive member upon positioning the support member (103).
7. The method according to any of items 4-6, wherein the plurality of provisions is defined at a leading edge and a trailing edge of the inner surface (104) proximal to root end of the mould (100).
8. The method according to any of items 4-7, wherein each of the plurality of provisions extends along spanwise direction of the wind turbine blade (10) along the inner surface (104) from the root end up to a predetermined distance.
9. The method according to any of items 1-8 comprises placing a layer of biax fiber on the inner surface (104) of the mould (105) before positioning the plurality of stacks of fiber (105a, 105b and 105c) and on the plurality of stacks of fiber (105a, 105b and 105c).
10. The method according to any of items 1-9, wherein a portion of the layer of biax fiber is secured to flanges (102) defined on the leading edge and the trailing edge of the mould (100).
11. The method according to item 10, wherein the portion of the layer of biax fiber is secured to the flanges (102) by a bonding process.
12. The method according to any of items 1-11, wherein the resin includes a polyester compound, preferably an unsaturated polyester compound.
13. The method according to any of items 1-12, wherein the resin is infused through a vacuum infusion process.
14. The method according to any of items 1-13 comprises,
   removing the portion of the shell of the wind turbine blade (10) from the mould (100) upon curing the infused resin; and
   at least partially removing the fastening members (106) from the portion of the shell of the wind turbine blade (10).
15. A mould (100) for manufacturing a shell of a wind turbine blade (10), the mould (100) comprising:
   an inner surface (104) and an outer surface, wherein the inner surface (104) is defined by an aerodynamic shape of the wind turbine blade (10) and extends in a spanwise direction,
      wherein, the inner surface of the mould (100) is defined with a plurality of provisions (101);
   a support member (103) accommodated in each of the plurality of provisions (101);
      wherein, the support member (103) is configured to receive fastening members (106) to secure each of a plurality of stacks of fiber (105a, 105b and 105c) positioned on the inner surface (104) of the mould (100).
16. The mould (100) according to item 15, wherein the plurality of provisions is defined at a leading edge and a trailing edge of the inner surface (104) proximal to root end of the mould (100).
17. The mould (100) according to item 16, wherein each of the plurality of provisions extends along the spanwise direction in the inner surface (104) from the root end up to a predetermined distance.
18. The mould according to any of items 15-17, wherein the plurality of stacks of fiber (105a, 105b and 105c) on the mould are glass fibers.
19. A method for manufacturing a wind turbine blade (10) having a profiled contour including a pressure side shell and a suction side shell, and a leading edge and a trailing edge with a chord having a chord length extending therebetween, the wind turbine blade (10) extending in a spanwise direction between a root end and a tip end, the method comprising:
   manufacturing at least one of the pressure side shell and the suction side shell of the wind turbine blade (10) according to a method as itemed in any of items 1-14;
   joining the pressure side shell with the suction side shell by bonding methods to obtain the wind turbine blade (10).
20. The method according to item 19 comprises trimming excessive material on the leading edge and the trailing edge of the wind turbine blade (10).

### List of reference numerals

- 2: Wind turbine
- 10: Blade of wind turbine
- 12: Tower
- 14: Support surface
- 16: nacelle
- 100: mould
- 101: provision defined in mould
- 102: flange
- 103: support member/rubber cork
- 104: inner surface
- 105a: first set of fiber layers
- 105b: second set of fiber layers
- 105c: subsequent set of fiber layers
- 106: Fastening member
- 107: vacuum infusion
- 108: biax layer

## Claims

1. A method of manufacturing a portion of a shell of a wind turbine blade (10), the method comprising:
positioning, a support member (103) in an inner surface of a mould (100), wherein the inner surface (104) of the mould (100) defines a profile of the portion of the shell;
placing a plurality of stacks of fiber (105a, 105b and 105c) sequentially on the inner surface (104) of the mould (100);
securing each of the plurality of stacks of fiber (105a, 105b and 105c) to the support member (103) by fastening members (106) thereby eliminating stitching of each of the plurality of stacks of fibers; and
infusing resin through the plurality of stacks of fiber (105a, 105b and 105c) and subsequently curing the same to obtain the portion of the shell of the wind turbine blade (10).

2. The method according to claim 1,
wherein the fastening members (106) are at least one of rivets, pins, and staples, and/or
wherein the support member (103) is a rubber cork.

3. The method according to claims 1 and 2, wherein dimensions of the fastening members (106) used to secure the plurality of stacks of fiber (105a, 105b and 105c) to the support member (103) increases with each stack of fiber of the plurality of stacks of fibers (105a, 105b and 105c) placed on the inner surface (104) of the mould (100).

4. The method according to any of claims 1-3, wherein the inner surface (104) of the mould (100) is defined with a plurality of provisions to accommodate the support member (103).

5. The method according to claim 4 comprises sealing each of the plurality of provisions by an adhesive member upon positioning the support member (103).

6. The method according to claim 4 or 5, wherein the plurality of provisions is defined at a leading edge and a trailing edge of the inner surface (104) proximal to root end of the mould (100),
e.g., wherein each of the plurality of provisions extends along spanwise direction of the wind turbine blade (10) along the inner surface (104) from the root end up to a predetermined distance.

7. The method according to any of claims 1-6 comprises placing a layer of biax fiber on the inner surface (104) of the mould (105) before positioning the plurality of stacks of fiber (105a, 105b and 105c) and on the plurality of stacks of fiber (105a, 105b and 105c).

8. The method according to any of claims 1-7, wherein a portion of the layer of biax fiber is secured to flanges (102) defined on the leading edge and the trailing edge of the mould (100), e.g.,
wherein the portion of the layer of biax fiber is secured to the flanges (102) by a bonding process

9. The method according to any of claims 1-8,
wherein the resin includes a polyester compound, preferably an unsaturated polyester compound, and/or
wherein the resin is infused through a vacuum infusion process.

10. The method according to any of claims 1-9 comprises,
removing the portion of the shell of the wind turbine blade (10) from the mould (100) upon curing the infused resin; and
at least partially removing the fastening members (106) from the portion of the shell of the wind turbine blade (10).

11. A mould (100) for manufacturing a shell of a wind turbine blade (10), the mould (100) comprising:
an inner surface (104) and an outer surface, wherein the inner surface (104) is defined by an aerodynamic shape of the wind turbine blade (10) and extends in a spanwise direction,
wherein, the inner surface of the mould (100) is defined with a plurality of provisions (101);
a support member (103) accommodated in each of the plurality of provisions (101);
wherein, the support member (103) is configured to receive fastening members (106) to secure each of a plurality of stacks of fiber (105a, 105b and 105c) positioned on the inner surface (104) of the mould (100).

12. The mould (100) according to claim 11, wherein the plurality of provisions is defined at a leading edge and a trailing edge of the inner surface (104) proximal to root end of the mould (100), e.g.,
wherein each of the plurality of provisions extends along the spanwise direction in the inner surface (104) from the root end up to a predetermined distance.

13. The mould according to any of claims 11-12, wherein the plurality of stacks of fiber (105a, 105b and 105c) on the mould are glass fibers.

14. A method for manufacturing a wind turbine blade (10) having a profiled contour including a pressure side shell and a suction side shell, and a leading edge and a trailing edge with a chord having a chord length extending therebetween, the wind turbine blade (10) extending in a spanwise direction between a root end and a tip end, the method comprising:
manufacturing at least one of the pressure side shell and the suction side shell of the wind turbine blade (10) according to a method as claimed in any of claims 1-10;
joining the pressure side shell with the suction side shell by bonding methods to obtain the wind turbine blade (10).

15. The method according to claim 14 comprises trimming excessive material on the leading edge and the trailing edge of the wind turbine blade (10).
